# EUROPÄISCHE PATENTSCHRIFT

(11) **EP 3 681 833 B1**
(45) Veröffentlichungstag und Bekanntmachung des Hinweises auf die Patenterteilung: **03.11.2021**
(21) Anmeldenummer: 18762877.1
(22) Anmeldetag: 11.09.2018
(51) Int. Cl.: B66B 5/00, H04L 12/403

(54) **STATUSÜBERPRÜFUNG VON FELDGERÄTEN EINER GEBÄUDEGEBUNDENEN PERSONENBEFÖRDERUNGSANLAGE**
STATUS CHECK OF FIELD DEVICES OF A PASSENGER TRANSPORT SYSTEM CONNECTED TO A BUILDING
VÉRIFICATION DE L'ÉTAT DES APPAREILS DE CHAMPS D'UNE INSTALLATION DE TRANSPORT DE PERSONNES RELIÉES AUX BÂTIMENTS

(30) Priorität: 13.09.2017 EP 17190951
(43) Veröffentlichungstag der Anmeldung: 22.07.2020
(73) Patentinhaber: Inventio AG, 6052 Hergiswil (CH)
(72) Erfinder: HOSEMANN, Axel, 5644 Auw (CH); HARTMANN, Thomas, 6277 Kleinwangen (CH)
(86) Internationale Anmeldenummer: PCT/EP2018/074355
(87) Internationale Veröffentlichungsnummer: WO 2019/052969

(56) Entgegenhaltungen:
- EP-A1- 0 498 751
- US-A1- 2003 111 300

## Beschreibung

Die vorliegende Erfindung betrifft ein Verfahren zur Statusüberprüfung von Feldgeräten einer gebäudegebundenen Personenbeförderungsanlage, sowie ein Kommunikationssystem, das dieses Verfahren durchführt.

Gebäudegebundene Personenbeförderungsanlagen, wie etwa Aufzüge, Fahrtreppen und Fahrsteige, dienen zum Befördern von Personen innerhalb von Gebäuden. Aufzuganlagen dienen beispielsweise dazu, Personen innerhalb eines Gebäudes zwischen verschiedenen Stockwerken befördern zu können. Hierzu kann im Regelfall eine Aufzugskabine innerhalb eines meist vertikalen Aufzugschachts verlagert werden. Wenn die Aufzugskabine ein gewünschtes Stockwerk erreicht hat, kann eine Aufzugtür und gegebenenfalls mit ihr eine zugehörige Stockwerktür geöffnet werden, um Personen einen Zutritt zu der Aufzugskabine bzw. ein Verlassen der Aufzugskabine zu ermöglichen.

Funktionen der Aufzuganlage, wie beispielsweise ein Betätigen ihres die Aufzugskabine verlagernden Antriebs, werden meist von einer zentralen Steuereinheit gesteuert. Die zentrale Steuereinheit kann dabei beispielsweise Informationen berücksichtigen, die sie durch Verarbeiten von Sensorsignalen erhalten kann. Die Sensorsignale können insbesondere von Geräten, wie zum Beispiel Türschaltern oder anderen Sicherheitsschaltern, stammen, welche in dem die Aufzuganlage aufnehmenden Gebäude verteilt angeordnet sind. Solche Geräte werden hierin nachfolgend als Feldgeräte bezeichnet.

Die Steuereinheit kann insbesondere Sicherheitsfunktionen ausführen, die, wenn einer der Sensoren eine sicherheitsrelevante Statusmeldung abgibt, einen Alarm erzeugen, der beispielsweise andere Funktionen der Steuereinheit blockiert. Beispielsweise kann der Antrieb der Steuereinheit nicht mehr aktiviert werden, wenn ein Türsensor meldet, dass eine Aufzugtür nicht geschlossen ist. Die entsprechenden Komponenten der Steuereinheit können als Überwachungsmodul bzw. die Steuereinheit als Überwachungseinheit aufgefasst werden.

Die Feldgeräte und die zentrale Steuereinheit sind in der Regel über einen Datenbus verbunden, über den diese Statusmeldungen ausgetauscht werden können.

Die EP 2 251 293 A1 beschreibt beispielsweise eine herkömmliche Aufzugsteuervorrichtung mit einer Feldbus-Schnittstelle.

Auch die US 2003/111300 A1 offenbart ein Verfahren und ein Kommunikationssystem nach dem Stand der Technik.

Eine Kodierung von Datenwerten mit der speziellen Hamming-Kodierung (7,4) ist beispielsweise in "https://en.wikipedia.org/wiki/Hamming(7,4)" beschrieben.

Da Statusmeldungen der Feldgeräte beispielsweise über sicherheitsrelevante Sensordaten möglichst zeitnah von einer Überwachungseinheit ausgewertet werden sollten, kann der Bedarf bestehen, diese Statusmeldungen möglichst schnell und fehlerfrei von den Feldgeräten zu der Überwachungseinheit zu übertragen.

Einem solchen Bedarf kann mit einer Aufzuganlage gemäss den unabhängigen Patentansprüchen entsprochen werden. Vorteilhafte Ausführungsformen sind in den abhängigen Patentansprüchen sowie der nachfolgenden Beschreibung dargelegt.

Ein Aspekt der Erfindung betrifft ein Verfahren zur Statusüberprüfung von Feldgeräten einer gebäudegebundenen Personenbeförderungsanlage. Die Feldgeräte sind meist mit Sicherheitssensoren verbunden. Unter dem Status eines Feldgeräts soll zum einen verstanden der Status des Feldgeräts selbst verstanden werden, also ob das Feldgerät funktionsbereit ist oder nicht. Zum anderen soll darunter aber auch der Status von an dem Feldgerät angeschlossenen Sicherheitssensoren verstanden werden, also beispielsweise ob ein Sicherheitsschalter offen oder geschlossen ist. Wie bereits gesagt, kann eine gebäudegebundene Personenbeförderungsanlage eine Aufzuganlage, eine Fahrtreppenanlage oder eine Fahrsteiganlage sein. Sicherheitssensoren können im Allgemeinen alle Arten von Sensoren sein, die sicherheitsrelevante Informationen über Komponenten der gebäudegebundenen Personenbeförderungsanlage detektieren. Beispiele für derartige Sensoren sind Türschliesssensoren, die detektieren, ob eine Aufzugtür ordnungsgemäss geschlossen ist.

Das Verfahren kann beispielsweise von einer Überwachungseinheit der gebäudegebundenen Personenbeförderungsanlage zusammen mit verschiedenen Feldgeräten automatisch durchgeführt werden, die miteinander mit einem Datenbus verbunden sind.

Gemäss einer Ausführungsform der Erfindung umfasst das Verfahren: Senden eines Befehlsblocks eines Statustelegramms von einer Überwachungseinheit über einen seriellen Bus an eine Mehrzahl von Feldgeräten; Ergänzen eines Datenblocks des genannten Statustelegramms durch Feldgeräte, die von dem Befehlsblock angesprochen werden, mit Statuswerten; Empfangen des ergänzten Datenblocks durch die Überwachungseinheit; und Auswerten der Statuswerte durch die Überwachungseinheit. Die genannten Feldgeräte ergänzen dabei den Datenblock des einen einzigen Statustelegramms, das von der Überwachungseinheit bei einer einzelnen Statusprüfung, also zu einem bestimmten Zeitpunkt gesendet wird.

Ein Telegramm kann als eine Bitfolge definierter Struktur angesehen werden, die über den seriellen Bus innerhalb eines geschlossenen Zeitfensters versendet wird. Für jedes Bit kann dabei die gleiche Zeiteinheit vorgesehen sein. Der Befehlsblock kann eine vorbestimmte Anzahl an Bits am Anfang des Statustelegramms sein. Der Datenblock können die verbleibenden Bits sein.

Jedes der seriell, also hintereinander in einer Reihe angeordneten Feldgeräte kann einen Statuswert, beispielsweise eine Zahl, dadurch erzeugen, dass es an es angeschlossene Sensoren abfragt und deren Messergebnisse bewertet. Beispielsweise können an ein Feldgerät mehrere Sensoren angeschlossen sein, für die jeweils ein sensorspezifischer Statuswert, wie etwa "OK" oder "Alarm", generiert wird. Derartige Sensoren können beispielsweise Türschalter und/oder Sicherheitsschalter sein. Die sensorspezifischen Statuswerte können zu dem feldgerätspezifischen Statuswert zusammengefasst werden. Der Statuswert kann unabhängig vom Eintreffen des Statustelegrams vom Feldgerät erzeugt werden und/oder darin gespeichert werden. Beispielsweise kann ein Statuswert 4 Bits umfassen, die jeweils auf 1 gesetzt werden, wenn der entsprechende Sicherheitssensor eine Gefahr meldet (wie etwa Tür offen).

Im einfachsten Fall kann der Statuswert auch nur anzeigen, ob das jeweilige Feldgerät noch funktionstüchtig ist. In diesem Fall kann es beispielsweise einen festen Statuswert senden. Es ist auch möglich, dass sich der die Funktionstüchtigkeit anzeigende Statuswert nach einer vorgegebenen Regel ändert, beispielsweise der Statuswert bei jeder Abfrage um 1 erhöht.

Wenn nun die Überwachungseinheit beginnt, das Statustelegramm zu versenden, und die an den seriellen Bus angeschlossenen Feldgeräte den Befehlsblock ausgewertet haben, können diese bestimmen, ob sie dazu aufgefordert werden, ihren Statuswert an die Überwachungseinheit zu ermitteln. Welche Feldgeräte angesprochen sind, kann in dem Befehlsblock kodiert sein. Es kann aber auch sein, dass, beispielsweise bei einer entsprechend geringen Anzahl von Feldgeräten, jedes Feldgerät angesprochen ist, wenn der Befehlsblock eines Statustelegramms empfangen wird.

Jedem der angesprochenen Feldgeräte ist eine Position im Datenblock zugewiesen und zu dem Zeitpunkt, wenn diese Position im Datenblock auf dem seriellen Bus moduliert werden soll, wird dies durch das entsprechende Feldgerät durchgeführt. Die Feldgeräte modulieren bei einer einzelnen Statusprüfung also alle nacheinander dasselbe Statustelegramm. Die Überwachungseinheit und die einzelnen Feldgeräte senden damit quasi gleichzeitig. Der von den angesprochenen Feldgeräten erzeugte Datenblock kann dann sofort von der Überwachungseinheit gelesen und ausgewertet werden.

Da die Feldgeräte nicht abwarten, dass das Statustelegramm als reines Befehlstelegramm komplett versendet wird und anschliessend ihre Statuswerte nicht in weiteren Antworttelegrammen versenden, kann das Abfragen der Statuswerte erheblich beschleunigt werden. Es muss lediglich ein einziges Statustelegramm, das von der Überwachungseinheit initiiert wird, von den angesprochenen Feldgeräten komplettiert werden. Der Datenblock des Statustelegramms kann zeitnah von der Überwachungseinheit ausgewertet werden, ohne dass von den Feldgeräten neue Telegramme initiiert werden müssen. Die Statusinformationen von den Feldgeräten können bitsynchron in ein einziges Statustelegramm eingebunden werden, das von allen Busteilnehmern, d.h. Feldgeräte und Überwachungseinheit, gleichzeitig gelesen und empfangen werden kann.

Der Datenblock kann nun von den Feldgeräten dadurch ergänzt werden, dass jedes an den seriellen Bus angeschlossene Feldgerät (falls es überhaupt dazu ausgeführt ist, einen sicherheitsrelevanten Statuswert zu erzeugen) die folgenden Schritte durchführt: Empfangen des Befehlsblocks durch ein Feldgerät; Bestimmen einer Statussendeposition in einem an den Befehlsblock anschliessenden Datenblock des Statustelegramms durch ein angesprochenes Feldgerät; und Senden eines Statuswerts des angesprochenen Feldgeräts über den seriellen Bus an die Überwachungseinheit, wenn die Statussendeposition in dem Datenblock erreicht ist, wobei der Statuswert den Status eines oder mehrerer Sicherheitssensoren kodiert, die an das Feldgerät angeschlossen sind. Jedem vom Befehlsblock angesprochenen Feldgerät sind dabei eine individuelle Statussendeposition und Statussendeposition zugeordnet, welche einen dem jeweiligen Feldgerät zugeordneten Bereich im Datenblock des Statustelegramms definieren. Die Statussendeposition und Statussendeposition sind dabei so festgelegt, dass sich die einzelnen Bereiche der Feldgeräte nicht überlappen.

Datenpakete bzw. Telegramme können über den seriellen Bus dadurch versendet werden, dass in zeitlicher Abfolge einzelne Bits des Telegramms über den Bus versendet werden. Für den Bitwert 0 kann der Bus beispielsweise mit dem Grund verbunden werden, was zu einer Spannung von 0 V auf dem Leiter des Busses führt. Ein Bitwert von 1 kann durch einen offenen (nicht auf Grund gesetzten) Bus mit beispielsweise 24 V versendet werden. Die Überwachungseinheit sendet im Datenblock immer den Bitwert 1, der von einem angesprochenen Feldgerät an der ihm vorgesehenen Positionen moduliert, also in den Bitwert 0 geändert werden kann. Die Zeiteinheit, während der ein Bit versendet wird, kann konstant sein. Die Bits können insbesondere in so genannten Rahmen mit einem Start- und Stopbit versendet werden. Damit kann berechnet werden, wann ein bestimmtes Bit eines Telegramms über den Bus versendet wird, nämlich der Startzeitpunkt des Telegramms plus der Nummer des Bits im Telegramm multipliziert mit der Länge der Zeiteinheit.

Die Position im Datenblock, an der ein Feldgerät seinen Statuswert zu senden beginnt, kann festgelegt sein, oder kann aufgrund des Befehlsblocks ermittelt werden. Beispielsweise umfasst der Datenblock eine Mehrzahl von gleich langen Statusworten, in die jeweils ein Statuswert kodiert wird. Die Statussendeposition kann durch Multiplizieren der Nummer des Feldgeräts im Datenblock mit der Länge eines Statusworts ermittelt werden.

Gemäss einer Ausführungsform der Erfindung kodiert der Befehlsblock einen Befehlswert, der den Beginn eines Statustelegramms kennzeichnet. Der Befehlswert kann eine Bitfolge festgelegter Länge am Anfang jedes Telegrams sein. Beispielsweise können andere Befehlswerte andere Typen von Telegrammen kennzeichnen, wie etwa Steuerungsbefehle für die Feldgeräte, die nicht nur Sensoren, sondern auch Aktoren ansteuern können.

Gemäss einer Ausführungsform der Erfindung sind Statustelegramme durch zwei verschiedene Befehlswerte gekennzeichnet. Es ist möglich, dass verschiedene Typen von Statustelegrammen vorhanden sind, die beispielsweise unterschiedlich kodiert sein können.

Gemäss einer Ausführungsform der Erfindung sind die verbleibenden Bits eines Statustelegramms mit einem ersten Befehlswert und/oder dessen Datenblock gegenüber den Bits eines entsprechenden Statustelegramms mit einem zweiten Befehlswert bzw. dessen Datenblock gleichen Inhalts invertiert. Es können zwei Typen Statustelegramme vorhanden sein, bei denen die Datenbits bzw. bestimmte Teile des Statustelegramms gegenüber einander invertiert sind.

Ein Befehlswert kann beispielsweise 4 Bit umfassen. Die beiden Typen von Statustelegrammen können beispielsweise die Befehlswerte aufweisen, die durch die Bitfolgen, die die Zahlen 3 (d.h. die Bitfolge 0011) und 12 (d.h. die Bitfolge 1100) repräsentieren, kodiert werden. Auch die Bitfolge des einen Befehlswerts kann gegenüber dem anderen Befehlswert invertiert sein.

Gemäss einer Ausführungsform der Erfindung kodiert der Befehlsblock Zieladressen für Feldgeräte, die bestimmen, welche Feldgeräte durch das Statustelegramm angesprochen sind. Jedes Feldgerät kann eine bezüglich des Busses eindeutige Adresse aufweisen, beispielsweise eine Zahl, die durch vier Bit oder durch ein Byte kodiert werden kann. Beispielsweise können die Zieladressen eines Statustelegramms durch zwei Zahlen kodiert werden, die den Beginn und das Ende eines Intervalls von Feldgerätadressen darstellen. Es ist auch möglich, dass lediglich der Beginn eines Intervalls von Zieladressen in dem Befehlsblock vorhanden ist und das Intervall aufgrund einer vorgegebenen Länge des Intervalls und/oder des Statustelegramms bestimmt wird.

Es ist aber auch möglich, dass alle an den Bus angeschlossenen Feldgeräte durch das Statustelegramm angesprochen werden, beispielsweise alleine über den Befehlswert. Zieladressen sind dann nicht notwendig und/oder der Befehlsblock muss keine Zieladressen kodieren.

Gemäss einer Ausführungsform der Erfindung kodiert der Befehlsblock eine Telegrammlänge. Die Telegrammlänge kann die Länge des Telegramms in Bit, Byte oder eine Anzahl von Datenwerten im Datenblock kodieren. Alternativ kann ein Intervall von Zieladressen durch die Adresse eines ersten Feldgeräts und eine Anzahl auf dieses Feldgerät im Adressraum nachfolgender Feldgeräte bestimmt werden. Diese Anzahl kann aus der Telegrammlänge bestimmt werden. Es ist möglich, dass Statustelegramme unterschiedliche Längen aufweisen können.

Gemäss einer Ausführungsform der Erfindung ist der Datenblock in Statusworte gleicher Bitlänge unterteilt, die den angesprochenen Feldgeräten zugeordnet sind und in die der Statuswert des zugeordneten Feldgeräts kodiert wird. Die Statussendeposition kann der Beginn des dem Feldgerät zugeordneten Statusworts sein. In den Statusworten sind die Statuswerte kodiert, entweder direkt als Zahlen im Binärformat und/oder auch mittels einer Kodierung, die eine fehlerhafte Übertragung über den seriellen Bus erkennen und/oder beseitigen kann. Beispielsweise kann ein Statuswort auch ein oder mehrere Paritätsbits enthalten. Jedes Statuswort kann beispielsweise ein Byte des Datenblocks sein.

Gemäss einer Ausführungsform der Erfindung umfasst das Verfahren weiter: Erzeugen eines Alarms, wenn die durch die Überwachungseinheit empfangenen Statuswerte auf eine Gefahr hindeuten, die durch mit den Feldgeräten verbundene Sicherheitssensoren detektiert wird. Beispielsweise kann ein beliebiger Statuswert ungleich 0 auf ein Sicherheitsproblem hinweisen (wie etwa "Tür offen"). In diesem Fall kann die Überwachungseinheit weitere Komponenten der gebäudegebundenen Personenbeförderungsanlage stoppen bzw. diese davon abhalten, den Betrieb aufzunehmen.

Gemäss einer Ausführungsform der Erfindung werden die Statuswerte mit einer fehleranzeigenden und/oder fehlerkorrigierenden Kodierung kodiert. Auf diese Weise kann die Überwachungseinheit erkennen, ob die Statuswerte korrekt über den seriellen Bus übertragen wurden. Auf einen Austausch von Bestätigungstelegrammen kann verzichtet werden. Weiter kann eine Anzahl fehlerhaft übertragener Werte durch eine Fehlerkorrektur vermindert werden.

Beispielsweise können die Statuswerte mit einer Hamming-Kodierung kodiert werden. Beispielsweise kann der Statuswert vier Bits an Information enthalten, die wiederum über die (7,4)-Hamming-Code-Generatormatrix auf sieben Bit abgebildet werden. Die sieben Bit Codeworte können noch um ein zusätzliches Paritätsbit erweitert werden, um eine minimale Hammingdistanz von 4 zu erreichen. Für eine detaillierte Beschreibung des (7,4)-Hamming-Codes siehe beispielsweise https://en.wikipedia.org/wiki/Hamming(7,4).

Gemäss einer Ausführungsform der Erfindung umfasst das Verfahren weiter: Erzeugen eines Alarms, wenn die durch die Überwachungseinheit empfangenen und dekodierten Statuswerte auf eine fehlerhafte Kodierung durch das sendende Feldgerät hindeuten. Neben einem Alarm aufgrund eines detektierten Sicherheitsproblems kann auch ein Alarm aufgrund eines möglicherweise fehlerhaften Sicherheitssystems erzeugt werden. Auch im Falle solch eines Alarms kann die Überwachungseinheit weitere Komponenten der gebäudegebundenen Personenbeförderungsanlage stoppen bzw. diese davon abhalten, den Betrieb aufzunehmen.

Gemäss einer Ausführungsform der Erfindung werden alle mit dem Bus verbundenen Feldgeräte mit einer Mehrzahl von Statustelegrammen angesprochen, die regelmässig in einem Zyklus versendet werden. In der Regel können die Statuswerte von der Überwachungseinheit regelmässig abgefragt werden. Wenn beispielsweise aufgrund der Anzahl der Feldgeräte nötig ist, dass mehr als ein Statustelegramm zur Abfrage verwendet werden muss, können die Abfragen zyklisch erfolgen.

Beispielsweise können die Feldgeräte in Gruppen eingeteilt sein, die von jeweils einem Statustelegramm aus dem Zyklus angesprochen werden. In jedem Zyklus können alle Gruppen von Feldgeräten abgefragt werden. Jede dieser Gruppen kann die gleiche Anzahl an Feldgeräten umfassen. Ein Statustelegramm kann in etwa 15 Feldgeräte gleichzeitig ansprechen. Die Anzahl der Feldgeräte kann durch die Länge des Datenblocks des Statustelegramms beschränkt sein.

Gemäss einer Ausführungsform der Erfindung werden Statustelegramme regelmässig erzeugt bzw. nach gleichen Zeitintervallen erzeugt. Auf diese Weise kann die gleiche Statusinformation immer wieder abgefragt werden. Wenn mehrere Statustelegramme vorhanden sind, die von den gleichen Feldgeräten ergänzt wurden, kann die Überwachungseinheit die Bits des Datenblocks eines Statustelegramms mittels einer Majoritätsbildung von Bitwerten von mehreren, die gleichen Feldgeräte ansprechenden Statustelegrammen ermitteln. Majoritätsbildung bedeutet, dass ein Bit auf den Wert gesetzt wird, der an der gleichen Position in den zu betrachtenden Statustelegrammen am häufigsten vorkommt. Beispielsweise kann der eigentliche Bitwert das Bit sein, das bei drei Zyklen an der betreffenden Position mindestens zweimal vorkommt.

Gemäss einer Ausführungsform der Erfindung erfolgt die Majoritätsbildung von Bits des Datenblocks und/oder eines Statusworts nur, wenn wenigstens ein Statuswort, das mit einer fehleranzeigenden Kodierung kodiert wurde, eine fehlerhafte Kodierung anzeigt. Ein fehlerfreier Datenblock bzw. Statuswort kann direkt ohne Majoritätsbildung weiterverarbeitet werden.

Gemäss einer Ausführungsform der Erfindung belegen Statustelegramme den Bus mit zeitlichem Abstand und sind zwischen den Statustelegrammen Karenzzeiten vorgesehen. Der Bus muss nicht vollständig mit Statustelegrammen belegt sein, sondern es können Zeiträume vorhanden sein, in denen andere Busteilnehmer als die Überwachungseinheit Telegramme versenden können. Beispielsweise kann ein Zyklus von Statustelegrammen, der mehrere Gruppen von Feldgeräten abfragt, aus Statustelegrammen gebildet sein, zwischen denen Karenzzeiten vorhanden sind.

Gemäss einer Ausführungsform der Erfindung beginnt ein Feldgerät, wenn es eine Statusänderung eines angeschlossenen Sicherheitssensors erfasst, innerhalb einer Karenzzeit ein Spontantelegramm an die Überwachungseinheit zu senden, das die Statusänderung kodiert. Ein Beispiel für Telegramme, die von den Feldgeräten selbstständig gesendet werden können, sind Spontantelegramme, die unabhängig von einer Aufforderung durch die Überwachungseinheit an diese gesendet werden. Auf diese Weise kann ein Feldgerät ein Sicherheitsproblem melden, obwohl es im Zyklus erst später abgefragt werden würde.

Von anderen Busteilnehmern versendete Telegramme und insbesondere Spontantelegramme können länger sein als die Karenzzeiten. In diesem Fall kann die Überwachungseinheit den Abfragezyklus so lange unterbrechen bzw. aufschieben, bis das Telegramm vollständig versendet wurde.

Ein weiterer Aspekt der Erfindung betrifft ein Kommunikationssystem für eine gebäudegebundene Personenbeförderungsanlage, das eine Mehrzahl von Feldgeräten aufweist; eine Überwachungseinheit; und einen seriellen Bus, mit dem die Überwachungseinheit und die Mehrzahl von Feldgeräten verbunden sind. Die Überwachungseinheit kann beispielsweise eine zentrale Steuerung oder ein Modul einer zentralen Steuerung der gebäudegebundenen Personenbeförderungsanlage sein. Das Kommunikationssystem ist weiter dazu ausgeführt, das Verfahren, so wie es obenstehend und unterstehend beschrieben ist, durchzuführen.

Gemäss einer Ausführungsform der Erfindung umfasst jedes der Feldgeräte ein Synchronisationsmodul. Das Synchronisationsmodul ist zum Empfangen des Befehlsblocks und zum Senden des entsprechenden Statusworts eines Statustelegramms ausgeführt. Weiter kann das Feldgerät weitere Komponenten umfassen, die beispielsweise mit Sensoren kommunizieren, Sensordaten verarbeiten und/oder andere Telegramme erzeugen und/oder verarbeiten können. Das Synchronisationsmodul kann beispielsweise in der Form eines CPLDs (complex programmable logic device) implementiert sein, während weitere Funktionen des Feldgeräts von einem Mikrocontroller ausgeführt werden können.

Das Synchronisationsmodul kann ein Sende-/Empfangsmodul zum Senden und Empfangen von Bitfolgen über den Bus aufweisen, wobei das Sende-/Empfangsmodul dazu ausgeführt ist, Befehlsblöcke eines Statustelegramms zu erkennen und Statuswerte innerhalb eines Statustelegramms zu versenden.

Weiter kann das Synchronisationsmodul ein Sendepositionsbestimmungsmodul aufweisen, das dazu ausgeführt ist, die Statussendeposition aus einem mit dem Sende-/Empfangsmodul empfangenen Befehlsblock eines Statustelegramms zu bestimmen und, wenn die Statussendeposition erreicht ist, das Sende-/Empfangsmodul zum Versenden des Statuswerts anzustossen. Der Statuswert kann dazu schon im Synchronisationsmodul gespeichert sein und/oder muss nicht erst von anderen Komponenten des Feldgeräts abgefragt werden.

Weiter kann das Synchronisationsmodul ein Kollisionserfassungsmodul aufweisen, das dazu ausgeführt ist, zu erkennen, wenn ein anderes Feldgerät und/oder die Überwachungseinheit bereits auf dem Bus sendet und ein Senden des Synchronisationsmoduls in diesem Fall abzubrechen.

Weiter kann das Synchronisationsmodul dazu ausgeführt sein, ein vom Feldgerät erzeugtes Spontantelegramm in den Bus zu senden bzw. dieses aufgrund eines Befehls vom Feldgerät selbst zu erzeugen. Es kann auch möglich sein, dass das Synchronisationsmodul während einem Statustelegramm das Versenden von Spontantelegrammen unterdrückt oder verzögert.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt schematisch eine gebäudegebundene Personenbeförderungsanlage in der Form einer Aufzuganlage gemäss einer Ausführungsform der Erfindung.
Fig. 2 zeigt schematisch ein Feldgerät für eine gebäudegebundene Personenbeförderungsanlage gemäss einer Ausführungsform der Erfindung.
Fig. 3 zeigt ein Flussdiagramm für ein Verfahren zur Statusüberprüfung von Feldgeräten einer gebäudegebundenen Personenbeförderungsanlage gemäss einer Ausführungsform der Erfindung.
Fig. 4 zeigt das Schema eines Statustelegramms für das Verfahren aus der Fig. 3.
Fig. 5 zeigt das Schema eines Telegrammzyklus für das Verfahren aus der Fig. 3.

Die Figuren sind lediglich schematisch und nicht massstabsgetreu. Gleiche Bezugszeichen bezeichnen in den verschiedenen Figuren gleiche oder gleichwirkende Merkmale.

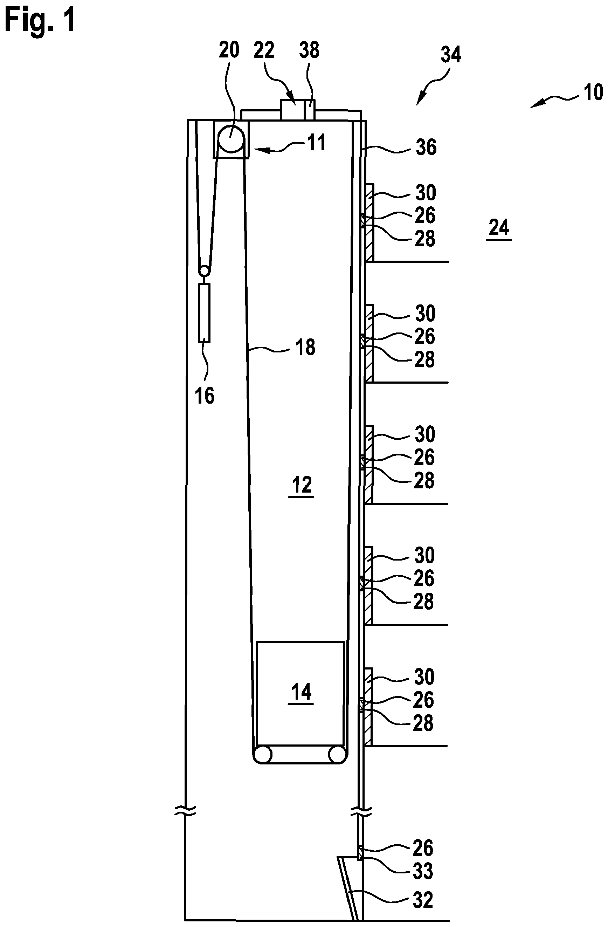

Fig. 1 zeigt eine gebäudegebundene Personenbeförderungsanlage 10 in der Form einer Aufzuganlage 10. Im Folgenden wird beispielhaft eine Aufzuganlage beschrieben. Es ist aber zu verstehen, dass auch andere Personenbeförderungsanlagen 10, wie etwa Fahrtreppenanlagen oder Fahrsteige, solche Kommunikationssysteme, Überwachungseinheiten, Feldgeräte und Sensoren aufweisen können, wie sie im Folgenden beschrieben werden.

Die Aufzuganlage 10 umfasst einen Aufzugschacht 12, in dem eine Aufzugskabine 14 und ein Gegengewicht 16 verfahren werden können. Die Aufzugskabine 14 und das Gegengewicht 16 sind hierzu an einem seil- oder riemenartigen Tragmittel 18 gehalten, welches von einer Antriebsmaschine 20 verlagert werden kann. Der Betrieb der Aufzuganlage 10 und insbesondere die Antriebsmaschine 20 kann mithilfe einer zentralen Steuereinheit 22 gesteuert werden.

Um eine korrekte Funktion und insbesondere eine Sicherheit der Aufzuganlage 10 gewährleisten zu können, sind in einem die Aufzuganlage 10 aufnehmenden Bauwerk 24 mehrere Feldgeräte 26 aufgenommen. Die Feldgeräte 26 sind dabei über das Bauwerk 24 hin verteilt angeordnet. Die Feldgeräte 26 können beispielsweise einen Türschalter 28 umfassen bzw. mit einem Türschalter 28 verbunden sein, welche einen Schliesszustand von Türen 30, insbesondere von Stockwerktüren, der Aufzuganlage 10 überwachen können. Die Türschalter 28 können als Sicherheitssensoren angesehen werden. Beispielsweise nahe einem Boden oder einer Grube des Aufzugschachts 12 kann ferner eine Leiter 32 gelagert sein, deren korrekt aufgeräumte Positionierung an einer Seitenwand des Aufzugschachts 12 beispielsweise mithilfe eines mit einem Feldgerät 26 verbundenen Schalter 33 überwacht wird. Der Schalter 33 kann ebenfalls als ein Sicherheitssensor angesehen werden. Die Feldgeräte 26 können Teil eines Kommunikationssystems 34 der Aufzuganlage 10 sein und beispielsweise über einen seriellen Bus 36 mit der zentralen Steuereinheit 22 bzw. insbesondere mit einer zum Beispiel dort integriert vorgesehenen Überwachungseinheit 38 verbunden sein. Die Feldgeräte 26 sind seriell hintereinander angeordnet, wobei jeweils zwei hintereinander angeordnete Feldgeräte 26 mit dem seriellen Bus 36 verbunden sind.

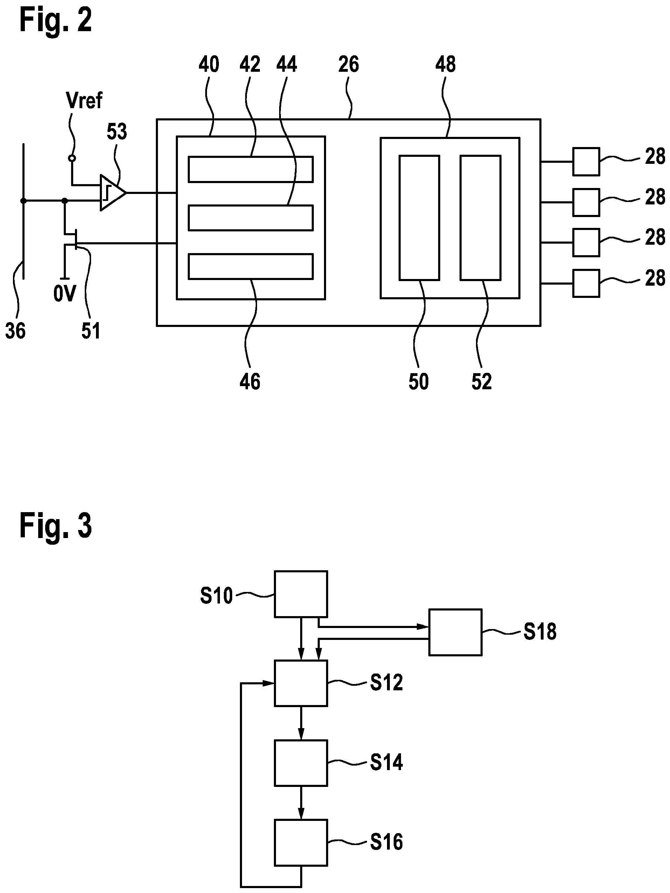

Fig. 2 zeigt ein Feldgerät 26. Das Feldgerät 26 ist dazu eingerichtet, von einem oder mehreren Sensoren 28 erzeugte Sensorsignale auszugeben und/oder von einem oder mehreren Aktoren umzusetzende Steuersignale zu empfangen. Dabei kann das Feldgerät 26 beispielsweise selbst einen oder mehrere Sensoren 28 und/oder einen oder mehrere Aktoren aufweisen. Das Feldgerät 26 kann die von dem Sensor erzeugten Sensorsignale über den seriellen Bus 36 an andere Feldgeräte 26 und insbesondere an die zentrale Steuereinheit 22 bzw. die Überwachungseinheit 38 ausgeben bzw. über diesen Bus 36 von anderen Geräten, insbesondere der zentralen Steuereinheit 22, empfangene Steuersignale an einen Aktor leiten, damit dieser die darin enthaltenen Steueranweisungen umsetzen kann. Alternativ oder zusätzlich kann ein Feldgerät 26 als Knotenpunkt dienen, der beispielsweise Sensorsignale von einem externen Sensor und/oder von einem anderen Feldgerät 26 empfangen kann und diese dann an weitere Geräte ausgeben kann bzw. der von weiteren Geräten Steuersignale empfangen kann und diese dann an einen externen Aktor weitergeben kann, damit dieser die Steuersignale umsetzt.

Die Fig. 2 zeigt, dass das Feldgerät 26 ein Synchronisationsmodul 40 umfassen kann, das wiederum in ein Sende-/Empfangsmodul 42, ein Sendepositionsbestimmungsmodul 44 und ein Kollisionserfassungsmodul 46 unterteilt sein kann. Die Funktionen der Module 42, 44, 46 werden in Bezug auf die folgende Fig. 3 genauer beschrieben. Beispielsweise kann das Synchronisationsmodul 40 als CPLD (complex programmable logic device) implementiert sein, um die Funktionen in hoher Geschwindigkeit umzusetzen.

Das Feldgerät kann weiter einen Mikrocontroller 48 umfassen, der ein eigenes Sende-/Empfangsmodul 50 und eine CPU 52 (central processing unit) umfassen kann. Das Sende-/Empfangsmodul 50 und/oder das Sende-/Empfangsmodul 42 können als UART (universal asynchronous receiver transmitter) ausgeführt sein.

Weiter ist in der Fig. 2 gezeigt, dass der serielle Bus 36 von dem Sende-/Empfangsmodul 42 mittels eines Transistors 51 mit Grund (0 V) verbunden werden kann, um auf dem Bus 36 das Bit "0" zu versenden. Ist der Bus 36 nicht von einem der Busteilnehmer auf Grund gesetzt, dann wird das Bit "1" gesendet. Weiter wird dem Sende-/Empfangsmodul 42 der aktuelle Wert des Busses in der Form eines Signals zugeführt, das aus einem Komparator 53 stammt, der die Spannung auf dem Bus 36 mit einem Referenzsignal Vref vergleicht.

Es ist zu verstehen, dass ein "Senden" auf dem seriellen Bus 36 bedeutet, dass der jeweilige Busteilnehmer (wie etwa die Überwachungseinheit 38 oder ein Feldgerät 26) Bits "0" und "1" auf dem Bus 36 setzt, wie eben beschrieben. Umgekehrt bedeutet ein "Empfangen", dass der jeweilige Busteilnehmer diese Bits mit dem Komparator auswertet.

Die Überwachungseinheit 38 kann analog an den seriellen Bus 36 angeschlossen sein und/oder auch ein Sende-/Empfangsmodul 50 (beispielsweise ein UART) aufweisen.

Fig. 3 zeigt ein Flussdiagramm für ein Verfahren zur Statusüberprüfung der Feldgeräte 26 der gebäudegebundenen Personenbeförderungsanlage 10, das von dem Kommunikationssystem 34 und insbesondere der Überwachungseinheit 38 und den Feldgeräten 26 durchgeführt werden kann.

Im Schritt S10 bestimmt die Überwachungseinheit 38 die an den Bus 36 angeschlossenen sicherheitsrelevanten Feldgeräte 26. Die Feldgeräte und deren Busadressen können beispielsweise in einer Tabelle von Busknoten in der Überwachungseinheit 38 gespeichert sein. Es ist auch möglich, dass sich Feldgeräte 26 am Bus 36 bzw. bei der Überwachungseinheit 38 über den Bus 36 anmelden.

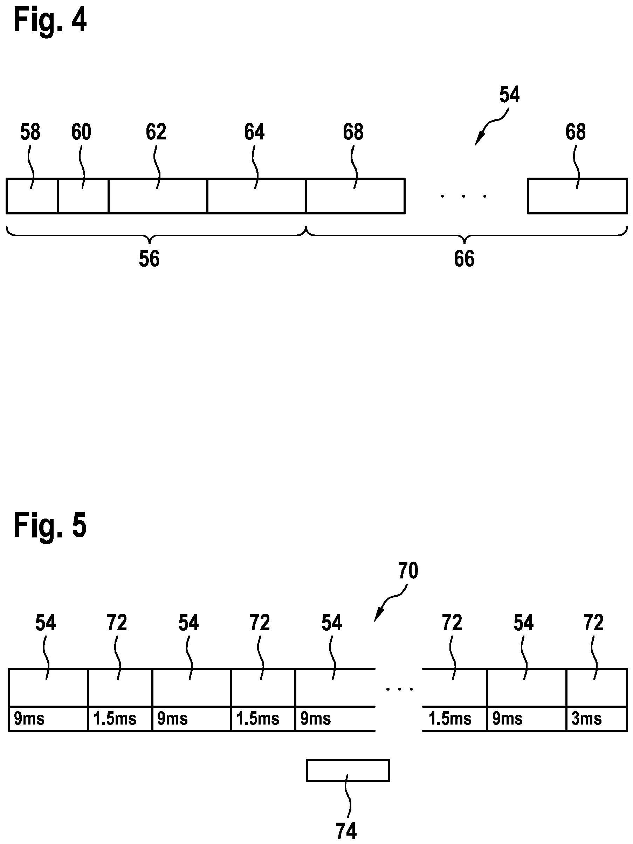

Weiter bildet die Überwachungseinheit 38 Gruppen von Feldgeräten 26, die jeweils gleichzeitig mit einem Statustelegramm 54 angesprochen werden sollen, so wie es beispielsweise in der Fig. 4 dargestellt ist. In den folgenden Schritten S12 bis S16 wird in einem Zyklus dann für jede der Gruppen ein Statustelegramm 54 erzeugt und ausgewertet.

Im Schritt S12 sendet die Überwachungseinheit 38 über den seriellen Bus 36 einen Befehlsblock 56 des Statustelegramms 54 an die an den seriellen Bus 36 angeschlossenen Feldgeräte 26, das eine Gruppe von Feldgeräten 26 entsprechend dem Zyklus betrifft.

Im Allgemeinen ist das in der Fig. 4 gezeigte Statustelegramm 54 in einen Befehlsblock 56 und einen Datenblock 66 unterteilt. Der Befehlsblock 56 wiederum ist in dieser Reihenfolge wiederum in einen Befehlswert 58, einen Längenwert 60 und zwei Adresswerte 62, 64 aufgeteilt. Auch andere Telegramme, die über den Bus 36 versendet werden, können diese Struktur aufweisen. Im Gegensatz zum Statustelegramm 54 können diese Telegramme weiter eine Prüfsumme aufweisen.

Der Beginn des Befehlsblocks 56 kodiert einen Befehlswert 58, der den Beginn eines Statustelegramms 54 kennzeichnet. Beispielsweise kann der Befehlswert 58 4 Bit lang sein.

Es ist möglich, dass ein Statustelegramm 54 durch zwei verschiedene Befehlswerte 58 gekennzeichnet wird, wie etwa die Binärzahlen 0011 und 1100. Die unterschiedlichen Befehlswerte können anzeigen, dass die verbleibenden Bits des Statustelegramms 54 für den zweiten Befehlswert 58 (wie etwa 1100) und/oder dessen Datenblock 66 gegenüber den Bits eines entsprechenden Statustelegramms 54 mit dem ersten Befehlswert 58 (wie etwa 0011) bzw. dessen Datenblock 66 gleichen Inhalts invertiert sind. Beispielsweise kann die Überwachungseinheit 38 abwechselnd Statustelegramme mit dem ersten Befehlswert 58 und dem zweiten Befehlswert 58 versenden.

Nach dem Befehlswert 58 kann das Statustelegramm 54 ein Längenwert 60 bzw. eine Telegrammlänge 60 kodieren. Dieser Längenwert kann beispielsweise die nächsten 4 Bit des Statustelegramms 54 darstellen und/oder anzeigen, wie lang das Statustelegramm 54 (in Bytes) ist.

Der Rest des Befehlsblocks 56 kann durch zwei Adresswerte 62, 64 gebildet sein. Die Adresswerte können jeweils die Länge eines Bytes, d.h. 8 Bit, aufweisen. Beispielsweise können die Adresswerte 62, 64 eine Quelladresse des Telegramms und eine Zieladresse kodieren, wie es etwa bei allen Telegrammen der Fall sein kann. Bei einem Statustelegramm 54 können die Adresswerte 62, 64 auch die Gruppen von Feldgeräten 26 kodieren, die durch das Statustelegramm 54 angesprochen werden sollen.

Beispielsweise können der Adresswert 62 ein erstes angesprochenes Feldgerät 26 und der Adresswert 64 ein letztes angesprochenes Feldgerät 26 eines Adressintervalls angeben. Es ist aber auch möglich, dass die Zieladresse 64 das erste angesprochene Feldgerät 26 angibt. Aus dem Längenwert 60 ergibt sich dann die Zahl der durch dieses Statustelegramm 54 angesprochenen Feldgeräte 26. Bei einer maximalen Länge des Statustelegramms von 15 Byte kann der Datenblock 66 maximal 12 Nutzbytes enthalten.

Im Schritt S14 empfangen alle Feldgeräte 26 den Befehlsblock 56 des Statustelegramms 54 und werten diesen mit dem Synchronisationsmodul 40 aus. Insbesondere wird der Befehlsblock 56 von dem Sende-/Empfangsmodul 42 empfangen und dekodiert. Wenn ein Befehlswert 58 für ein Statustelegramm 54 empfangen wurde, werden die Elemente 60, 62, 64 an das Sendepositionsbestimmungsmodul 44 weitergeleitet. Telegramme mit anderem Inhalt werden von dem Sende-/Empfangsmodul 42 an das Sende-/Empfangsmodul 50 weitergeleitet.

Wenn das Sendepositionsbestimmungsmodul 44 eines Feldgeräts 26 feststellt, dass das Feldgerät durch das Statustelegramm 54 adressiert wird, bestimmt es eine Statussendeposition in dem Datenblock 66. Der Datenblock 66 kann in Statusworte 68 gleicher Bitlänge unterteilt sein (wie etwa 8 Bit, d.h. ein Byte), die den angesprochenen Feldgeräten 26 zugeordnet sind. Ein Statuswort kann zusätzlich Start- und Stopbits enthalten. Die Statussendeposition kann dann beispielsweise durch Subtrahieren der Adresse des Feldgeräts 26, die im Synchronisationsmodul 40 gespeichert sein kann, von der ersten Zieladresse (die im Adresswert 64 gespeichert sein kann) ermittelt werden. Ist das Ergebnis grösser gleich 0 und kleiner als die Länge des Datenblocks 66, ist das Ergebnis die Statussendeposition.

Das Sendepositionsbestimmungsmodul 44 wartet anschliessend, bis die Sendeposition im Telegramm erreicht ist. Die zeitliche Differenz zum Ende des Befehlsblocks 56 kann durch Multiplizieren der Zeiteinheit für ein Bit mit der Bitlänge eines Statusworts 68 und mit der Sendeposition bestimmt werden.

Ist die Sendeposition erreicht, weist das Sendepositionsbestimmungsmodul 44 das Sende-/Empfangsmodul 42 an, einen Statuswert des Feldgeräts 26 über den seriellen Bus 36 an die Überwachungseinheit 38 zu senden.

Der Statuswert kann den Status des Feldgerät 26 selbst oder den Status einer oder mehrerer der Sicherheitssensoren 28 kodieren, die an das entsprechende Feldgerät 26 angeschlossen sind. Der Statuswert kann in dem Synchronisationsmodul 40 gespeichert sein und/oder kann vom Mikrocontroller 48 regelmässig aktualisiert werden.

Für jedes Statuswort 68 kann ein erweiterter 8,4-Hamming-Code verwendet werden. Dabei können 4 Nutzbits über die 7,4-Hamming-Code-Generatormatrix auf 7-Bit-Codeworte abgebildet und noch um ein zusätzliches Paritätsbit erweitert werden, um eine minimale Hammingdistanz von 4 zu erreichen (siehe beispielsweise https://en.wikipedia.org/wiki/Hamming7,4).

Anschliessend kann eine XOR-Operation des Statuswerts mit der Adresse des Feldgeräts 26, das den Statuswert versendet, erfolgen. Damit kann die Überwachungseinheit 38 überprüfen, ob der Statuswert vom erwarteten Feldgerät 26 stammt, in dem die erwartete Adresse mittels einer XOR-Operation auf den Statuswert angewendet wird und ein gültiger Hamming-Code entsteht.

Das Kodieren des Statuswerts, der in dem Statuswort 68 versendet wird, kann durch das Synchronisationsmodul 40 oder bereits durch den Mikrocontroller 48 erfolgen.

Im Schritt S16 empfängt die Überwachungseinheit 38 den durch die angesprochenen Feldgeräte 26 ergänzten Datenblock 66 und wertet die Statuswerte aus.

Wenn die Statustelegramme 54 für eine Gruppe von Feldgeräten regelmässig erzeugt werden, kann die Überwachungseinheit 38 die Bits des Datenblocks 66 eines Statustelegramms 54 mittels einer Majoritätsbildung von Bitwerten von mehreren, die gleichen Feldgeräte 26 ansprechenden Statustelegrammen 54 ermitteln.

Beispielsweise können die Datenblöcke 66 von aufeinanderfolgenden Statustelegrammen 54, die die gleiche Gruppe von Feldgeräten 26 betreffen, mittels Majoritätsbildung zusammengefasst werden.

Es kann auch sein, dass die Majoritätsbildung Feldgerät-spezifisch erfolgt, d.h., dass die letzten empfangenen Statusworte, die einem Feldgerät 26 zugeordnet sind, auf diese Weise zusammengefasst werden.

Die Majoritätsbildung von Bits des Datenblocks 66 und/oder eines Statusworts 68 kann nur dann erfolgen, wenn wenigstens ein Statuswort 68, das mit einer fehleranzeigenden Kodierung kodiert wurde, eine fehlerhafte Kodierung anzeigt.

Das Zeitfenster der Betrachtung kann beispielsweise drei Zyklen lang sein. Die Gültigkeit der Information kann pro Statuswort 68, also pro Feldgerät 26, ausgewertet werden. Zuerst kann die Fehlerkorrektur des 8,4-Hamming-Codes auf jedes der zuletzt empfangenen Statusworte 68 angewandt werden. Dem jüngsten gültigen Statuswort 68 kann dann vertraut werden. Wenn keins der betrachteten Statusworte 68 von einem Feldgerät 26 gültig ist, wird über bitweise Majorität aus den drei letzten Statusworten 68 ein Ersatzstatuswort gebildet. Ist auch dieses ungültig, kann ein fehlerhafter Zustand des Feldgeräts 26 oder der Kommunikationsverbindung angenommen werden.

Im Falle eines korrekten 8,4-Hamming-Codes wird der Statuswert ermittelt und überprüft, ob das entsprechende Feldgerät 26 ein sicherheitsrelevantes Problem meldet.

In beiden Fällen, d.h., wenn die durch die Überwachungseinheit 38 empfangenen Statuswerte auf eine Gefahr hindeuten, die durch mit den Feldgeräten 26 verbundene Sicherheitssensoren 28 detektiert wird, oder wenn die durch die Überwachungseinheit 38 empfangenen und dekodierten Statuswerte auf eine fehlerhafte Kodierung hindeuten, wird durch die Überwachungseinheit 38 ein Alarm erzeugt. Der Alarm kann an die zentrale Steuerung 22 weitergemeldet werden, die dann beispielsweise den Betrieb der Anlage 10 stoppt.

Nach dem Schritt S16 kann die Überwachungseinheit 38 das nächste Statustelegramm 54 eines Zyklus versenden. Es ist zu verstehen, dass die Schritte S12 und S16 mit entsprechender Hardware auch zumindest teilweise parallel ausgeführt werden können.

Fig. 5 zeigt ein Schema für einen Abfragezyklus 70, mit dem alle an den Bus 36 angeschlossenen Feldgeräte 26 einmal mittels einer Mehrzahl von Statustelegrammen 54 abgefragt werden können. Die Feldgeräte 26 sind in Gruppen eingeteilt, die von jeweils einem Statustelegramm 54 aus dem Zyklus 70 angesprochen werden. Die Abfragezyklen 70 können regelmässig versendet werden.

Gezeigt ist ein Abfragezyklus 70, mit dem etwa 200 Feldgeräte 26 in einer Zykluszeit von etwa 180 ms angesprochen werden können. Um die 200 Feldgeräte 26 ansprechen zu können, werden in dem Abfragezyklus 70 17 Statustelegramme versendet, die jeweils 12 Feldgeräte 26 ansprechen können.

Jedes der Statustelegramme 54 kann eine Länge von etwa 9 ms aufweisen. Zwischen den Statustelegrammen 54 ist eine Karenzzeit 72 vorgesehen, die etwa 1,5 ms betragen kann. Die Karenzzeiten können von den Feldgeräten 26 oder anderen Busteilnehmern dazu verwendet werden, eigene Telegramme zu versenden. In der Fig. 5 ist dazu beispielhaft ein Spontantelegramm 74 gezeigt.

Zwischen den Statustelegrammen kann die Überwachungseinheit lediglich auf Spontantelegramme 74 warten. Am Ende eines Abfragezyklus 70 kann eine längere Karenzzeit 74 für normal priorisierte Telegramme vorgesehen sein.

Im Schritt S18 (siehe Fig. 3) kann ein Feldgerät 26, wenn es eine Statusänderung eines angeschlossenen Sicherheitssensors 28 erfasst, innerhalb einer Karenzzeit 72 ein Spontantelegramm 74 an die Überwachungseinheit 38 zu senden beginnen, das die Statusänderung kodiert.

Ein Spontantelegramm 74 kann dann von der Überwachungseinheit 38 sofort dekodiert werden. Wird ein Spontantelegramm 74 gesendet, kann die Überwachungseinheit 38 das Durchführen des Abfragezyklus 70 unterbrechen.

Es ist möglich, dass die Überwachungseinheit 38 mit einem weiteren Telegramm an den Versender des Spontantelegramms 74 den Empfang des Spontantelegramms 74 bestätigt. Auch ein fehlerhafter Empfang kann durch ein entsprechendes Telegramm an den Versender des Spontantelegramms 74 mitgeteilt werden. Empfängt der Versender des Spontantelegramms 74 kein Bestätigungstelegramm oder ein Telegramm über einen fehlerhaften Empfang, kann der Versender in der nächsten Karenzzeit 72 das Versenden des Spontantelegramms 74 wiederholen.

Beispielsweise um zu verhindern, dass zwei Feldgeräte 26 gleichzeitig ein Spontantelegramm 74 versenden, überwacht das Kollisionserfassungsmodul 46 jedes Feldgeräts 26 den Bus 36. Dazu kann das Kollisionserfassungsmodul 46 den Bus mit einer Samplerate überwachen, die wesentlich grösser als die Frequenz der Bitwerte ist. Beispielsweise kann diese Samplerate um mindestens den Faktor 10 grösser sein als die Bit-Frequenz.

Sieht das Kollisionserfassungsmodul 46, dass vor Beginn einer beabsichtigten Sendung der Bus 36 bereits belegt ist, kann es das Senden unterbinden. In diesem Fall können Kollisionen vollständig vermieden werden.

Wurde mit dem Senden bereits begonnen, kann eine Kollision von dem Feldgerät 26 entdeckt werden, das das Bussignal auf "1" setzt, aber stattdessen "0" auf der Empfangsseite, d.h. nach dem Komparator 53, sieht. In diesem Fall bricht das Feldgerät 26, das die Kollision erkannt hat, seine Sendung ab und das Bit des anderen Feldgeräts 26 wird korrekt übertragen.

Abschliessend ist daraufhinzuweisen, dass Begriffe wie "aufweisend", "umfassend" etc. keine anderen Elemente oder Schritte ausschliessen und Begriffe wie "eine" oder "ein" keine Vielzahl ausschliessen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zur Statusüberprüfung von Feldgeräten (26) einer gebäudegebundenen Personenbeförderungsanlage (10), das Verfahren umfassend:
Senden (S10) eines Befehlsblocks (56) eines Statustelegramms (54) von einer Überwachungseinheit (38) über einen seriellen Bus (36) an eine Mehrzahl von Feldgeräten (26);
Ergänzen (S12) des genannten Statustelegramms (54) durch Feldgeräte (26), die von dem genannten Befehlsblock (56) angesprochen werden, auf folgende Weise:
Empfangen (S14) des genannten Befehlsblocks (56) durch ein Feldgerät (26);
Bestimmen (S14) einer Statussendeposition in einem an den genannten Befehlsblock (56) anschliessenden Datenblock (66) des genannten Statustelegramms (54) durch ein angesprochenes Feldgerät (26);
Senden (S14) eines Statuswerts des angesprochenen Feldgeräts (26) über den seriellen Bus (36) an die Überwachungseinheit (38), wenn die Statussendeposition in dem genannten Datenblock (66) erreicht ist, wobei der Statuswert den Status des Feldgeräts (26) kodiert;
Empfangen des durch die angesprochenen Feldgeräte (26) ergänzten Datenblocks (66) durch die Überwachungseinheit (38);
Auswerten (S16) der Statuswerte durch die Überwachungseinheit (38).

2. Verfahren nach Anspruch 1,
wobei der Befehlsblock (56) einen Befehlswert (58) kodiert, der den Beginn eines Statustelegramms (54) kennzeichnet.

3. Verfahren nach Anspruch 2,
wobei Statustelegramme (54) durch zwei verschiedene Befehlswerte (58) gekennzeichnet sind;
wobei die verbleibenden Bits eines Statustelegramms (54) mit einem ersten Befehlswert (58) und/oder dessen Datenblock (66) gegenüber den Bits eines entsprechenden Statustelegramms (54) mit einem zweiten Befehlswert (58) bzw. dessen Datenblock (66) gleichen Inhalts invertiert sind.

4. Verfahren nach einem der vorangehenden Ansprüche,
wobei der Befehlsblock (56) Zieladressen (64) für Feldgeräte (26) kodiert, die bestimmen, welche Feldgeräte (26) durch das Statustelegramm (54) angesprochen sind.

5. Verfahren nach einem der vorhergehenden Ansprüche,
wobei der Befehlsblock (56) eine Telegrammlänge (60) kodiert.

6. Verfahren nach einem der vorhergehenden Ansprüche,
wobei der Datenblock (66) in Statusworte (68) gleicher Bitlänge unterteilt ist, die den angesprochenen Feldgeräten (26) zugeordnet sind und in die der Statuswert des zugeordneten Feldgeräts (26) kodiert wird;
wobei die Statussendeposition der Beginn des dem Feldgerät (26) zugeordneten Statusworts (68) ist.

7. Verfahren nach einem der vorangehenden Ansprüche, weiter umfassend:
Erzeugen eines Alarms, wenn die durch die Überwachungseinheit (68) empfangenen Statuswerte auf eine Gefahr hindeuten, die durch mit den Feldgeräten (26) verbundene Sicherheitssensoren (28, 33) detektiert wird.

8. Verfahren nach einem der vorangehenden Ansprüche,
wobei die Statuswerte mit einer fehleranzeigenden und/oder fehlerkorrigierenden Kodierung kodiert werden; und/oder
wobei die Statuswerte mit einer Hamming-Kodierung kodiert werden.

9. Verfahren nach einem der vorangehenden Ansprüche, weiter umfassend:
Erzeugen eines Alarms, wenn die durch die Überwachungseinheit (38) empfangenen und dekodierten Statuswerte auf eine fehlerhafte Kodierung hindeuten.

10. Verfahren nach einem der vorangehenden Ansprüche,
wobei alle mit dem Bus (36) verbundenen Feldgeräte (26) mit einer Mehrzahl von Statustelegrammen (54) angesprochen werden, die regelmässig in einem Zyklus (70) versendet werden;
wobei die Feldgeräte (26) in Gruppen eingeteilt sind, die von jeweils einem Statustelegramm (54) aus dem Zyklus (70) angesprochen werden.

11. Verfahren nach einem der vorhergehenden Ansprüche,
wobei Statustelegramme (54) regelmässig erzeugt werden;
wobei die Überwachungseinheit (38) die Bits des Datenblocks (66) eines Statustelegramms (54) mittels einer Majoritätsbildung von Bitwerten von mehreren, die gleichen Feldgeräte (26) ansprechenden Statustelegramme (54) ermittelt.

12. Verfahren nach Anspruch 11,
wobei die Majoritätsbildung von Bits des Datenblocks (66) und/oder eines Statusworts (68) nur erfolgt, wenn wenigstens ein Statuswort (68), das mit einer fehleranzeigenden Kodierung kodiert wurde, eine fehlerhafte Kodierung anzeigt.

13. Verfahren nach einem der vorangehenden Ansprüche,
wobei Statustelegramme (54) den Bus (36) mit zeitlichem Abstand belegen und zwischen den Statustelegrammen (54) Karenzzeiten (72) vorgesehen sind;
wobei ein Feldgerät (26), wenn es eine Statusänderung eines angeschlossenen Sicherheitssensors (28, 33) erfasst, innerhalb einer Karenzzeit (72) ein Spontantelegramm (74) an die Überwachungseinheit (38) zu senden beginnt, das die Statusänderung kodiert.

14. Kommunikationssystem (34) für eine gebäudegebundene Personenbeförderungsanlage (10), wobei das Kommunikationssystem (34) umfasst:
eine Mehrzahl von Feldgeräten (26);
eine Überwachungseinheit (38);
einen seriellen Bus (36), mit dem die Überwachungseinheit (38) und die Mehrzahl von Feldgeräten (26) verbunden sind;
wobei das Kommunikationssystem (34) dazu ausgeführt ist, das Verfahren nach einem der vorhergehenden Ansprüche durchzuführen.

15. Kommunikationssystem (34) nach Anspruch 14,
wobei jedes der Feldgeräte (26) ein Synchronisationsmodul (40) umfasst, das aufweist:
ein Sende-/Empfangsmodul (42) zum Senden und Empfangen von Bitfolgen über den Bus (36), wobei das Sende-/Empfangsmodul (42) dazu ausgeführt ist, Befehlsblöcke (56) eines Statustelegramms (54) zu erkennen und Statuswerte innerhalb eines Statustelegramms (54) zu versenden;
ein Sendepositionsbestimmungsmodul (44), das dazu ausgeführt ist, die Statussendeposition aus einem mit dem Sende-/Empfangsmodul (42) empfangenen Befehlsblock (56) eines Statustelegramms (54) zu bestimmen und damit das Sende-/Empfangsmodul (42) zum Versenden des Statuswerts anzustossen.

## Claims

1. A method for checking the status of field devices (26) of a building-based passenger transport system (10), the method comprising:
transmitting (S10) a command block (56) of a status telegram (54) from a monitoring unit (38) via a serial bus (36) to a plurality of field devices (26);
supplementing (S12) said status telegram (54) by field devices (26) addressed by said command block (56) in the following manner:
receiving (S14) said command block (56) by means of a field device (26);
determining (S14) a status end position in a data block (66) of said status telegram (54) adjoining said command block (56) by means of an addressed field device (26);
transmitting (S14) a status value of the addressed field device (26) to the monitoring unit (38) via the serial bus (36) when the status end position in said data block (66) is reached, the status value encoding the status of the field device (26);
receiving the data block (66) supplemented by the addressed field devices (26) by means of the monitoring unit (38);
evaluating (S16) the status values by means of the monitoring unit (38).

2. The method according to claim 1,
wherein the command block (56) encodes a command value (58) that identifies the start of a status telegram (54).

3. The method according to claim 2,
wherein status telegrams (54) are identified by two different command values (58);
wherein the remaining bits of a status telegram (54) having a first command value (58) and/or the data block (66) thereof are inverted relative to the bits of a corresponding status telegram (54) having a second command value (58) and the data block (66) thereof having the same content.

4. The method according to any of the preceding claims,
wherein the command block (56) encodes destination addresses (64) for field devices (26) which determine which field devices (26) are addressed by the status telegram (54).

5. The method according to any of the preceding claims,
wherein the command block (56) encodes a telegram length (60).

6. The method according to any of the preceding claims,
wherein the data block (66) is divided into status words (68) of the same bit length, which are assigned to the addressed field devices (26) and in which the status value of the assigned field device (26) is encoded;
wherein the status end position is the start of the status word (68) assigned to the field device (26).

7. The method according to any of the preceding claims, further comprising:
generating an alarm if the status values received by the monitoring unit (68) indicate a hazard detected by security sensors (28, 33) connected to the field devices (26).

8. The method according to any of the preceding claims,
wherein the status values are encoded with error-indicating and/or error-correcting encoding; and/or
wherein the status values are encoded using Hamming encoding.

9. The method according to any of the preceding claims, further comprising:
generating an alarm if the status values received and decoded by the monitoring unit (38) indicate erroneous encoding.

10. The method according to any of the preceding claims,
wherein all field devices (26) connected to the bus (36) are addressed by a plurality of status telegrams (54), which are regularly transmitted in a cycle (70);
wherein the field devices (26) are divided into groups, which are each addressed by a status telegram (54) from the cycle (70).

11. The method according to any of the preceding claims,
wherein status telegrams (54) are generated regularly;
wherein the monitoring unit (38) determines the bits of the data block (66) of a status telegram (54) by means of a majority formation of bit values of a plurality of status telegrams (54) addressing the same field devices (26).

12. The method according to claim 11,
wherein the majority formation of bits of the data block (66) and/or a status word (68) takes place only if at least one status word (68) which has been encoded with error-indicating encoding indicates erroneous encoding.

13. The method according to any of the preceding claims,
wherein status telegrams (54) occupy the bus (36) at a time interval and waiting periods (72) are provided between the status telegrams (54);
wherein a field device (26), when it detects a status change in a connected safety sensor (28, 33), starts transmitting a spontaneous telegram (74) to the monitoring unit (38) within a waiting period (72), which encodes the status change.

14. A communication system (34) for a building-based passenger transport system (10), the communication system (34) comprising:
a plurality of field devices (26);
a monitoring unit (38);
a serial bus (36) to which the monitoring unit (38) and the plurality of field devices (26) are connected;
wherein the communication system (34) is configured to carry out the method according to any of the preceding claims.

15. The communication system (34) according to claim 14,
wherein each of the field devices (26) has a synchronization module (40), which comprises:
a transceiver module (42) for transmitting and receiving bit sequences via the bus (36), wherein the transceiver module (42) is configured to recognize command blocks (56) of a status telegram (54) and to transmit status values within a status telegram (54);
a transmission position determination module (44) which is configured to determine the status end position from a command block (56) of a status telegram (54) received with the transceiver module (42) and to thus trigger the transceiver module (42) to transmit the status value.

## Revendications

1. Procédé de vérification de l'état des appareils de champ (26) d'une installation de transport de personnes reliée à un bâtiment (10), le procédé comprenant :
l'envoi (S10) d'un bloc d'instructions (56) d'un télégramme d'état (54) d'une unité de surveillance (38) à une pluralité d'appareils de champ (26) par l'intermédiaire d'un bus série (36) ;
le fait de compléter (S12) ledit télégramme d'état (54) par des appareils de champ (26) répondant audit bloc d'instructions (56), de la manière suivante :
réception (S14) dudit bloc de commande (56) par un appareil de champ (26) ;
détermination (S14) d'une position d'envoi d'état dans un bloc de données (66) dudit télégramme d'état (54) à la suite dudit bloc de commande (56) par un appareil de champ (26) répondant ;
envoi (S14) d'une valeur d'état de l'appareil de champ (26) répondant à l'unité de surveillance (38) par l'intermédiaire du bus série (36) si la position d'envoi d'état dans ledit bloc de données (66) est atteinte, la valeur d'état codant l'état de l'appareil de champ (26);
la réception du bloc de données (66) complété par les appareils de champ (26) répondants, par l'unité de surveillance (38) ;
l'évaluation (S16) des valeurs d'état par l'unité de surveillance (38).

2. Procédé selon la revendication 1,
dans lequel le bloc d'instructions (56) code une valeur d'instructions (58) qui caractérise le début d'un télégramme d'état (54).

3. Procédé selon la revendication 2,
dans lequel des télégrammes d'état (54) sont **caractérisés par** deux valeurs d'instructions (58) différentes ;
dans lequel les bits restants d'un télégramme d'état (54) comportant une première valeur d'instructions (58) et/ou son bloc de données (66) sont inversés par rapport aux bits d'un télégramme d'état (54) correspondant comportant une seconde valeur d'instructions (58) ou son bloc de données (66) de même contenu.

4. Procédé selon l'une des revendications précédentes,
dans lequel le bloc d'instructions (56) code des adresses cibles (64) pour des appareils de champ (26), lesquelles adresses cibles déterminent quels appareils de champ (26) répondent au télégramme d'état (54).

5. Procédé selon l'une des revendications précédentes,
dans lequel le bloc d'instructions (56) code une longueur de télégramme (60).

6. Procédé selon l'une des revendications précédentes,
dans lequel le bloc de données (66) est subdivisé en mots d'état (68) de même longueur binaire, lesquels sont affectés aux appareils de champ (26) répondants et dans lesquels est codée la valeur d'état de l'appareil de champ (26) affecté ;
dans lequel la position d'envoi d'état est le début du mot d'état (68) affecté à l'appareil de champ (26).

7. Procédé selon l'une des revendications précédentes, comprenant en outre :
la génération d'une alarme si les valeurs d'état reçues par l'unité de surveillance (68) indiquent un danger qui est détecté par des capteurs de sécurité (28, 33) connectés aux appareils de champ (26).

8. Procédé selon l'une des revendications précédentes,
dans lequel les valeurs d'état sont codées avec un codage d'indication d'erreur et/ou de correction d'erreur ; et/ou
dans lequel les valeurs d'état sont codées avec un codage de Hamming.

9. Procédé selon l'une des revendications précédentes, comprenant en outre :
la génération d'une alarme si les valeurs d'état reçues et décodées par l'unité de surveillance (38) indiquent un codage erroné.

10. Procédé selon l'une des revendications précédentes,
dans lequel tous les appareils de champ (26) connectés au bus (36) répondent à une pluralité de télégrammes d'état (54) qui sont envoyés régulièrement dans un cycle (70);
dans lequel les appareils de champ (26) sont divisés en des groupes qui répondent à un télégramme d'état (54) respectif du cycle (70).

11. Procédé selon l'une des revendications précédentes,
dans lequel des télégrammes d'état (54) sont générés régulièrement ;
dans lequel l'unité de surveillance (38) détermine les bits du bloc de données (66) d'un télégramme d'état (54) au moyen d'une formation majoritaire de valeurs de bits à partir de plusieurs télégrammes d'état (54) auxquels répondent les mêmes appareils de champ (26).

12. Procédé selon la revendication 11,
dans lequel la formation majoritaire de bits du bloc de données (66) et/ou d'un mot d'état (68) n'a lieu que si au moins un mot d'état (68) qui a été codé avec un codage d'indication d'erreur indique un codage erroné.

13. Procédé selon l'une des revendications précédentes,
dans lequel des télégrammes d'état (54) occupent le bus (36) avec un intervalle de temps, et des périodes d'attente (72) sont prévues entre les télégrammes d'état (54) ;
dans lequel un appareil de champ (26), s'il détecte un changement d'état d'un capteur de sécurité (28, 33) associé, commence à envoyer un télégramme spontané (74) à l'unité de surveillance (38) pendant une période d'attente (72), lequel télégramme spontané code le changement d'état.

14. Système de communication (34) pour une installation de transport de personnes reliée à un bâtiment (10), le système de communication (34) comprenant :
une pluralité d'appareils de champ (26) ;
une unité de surveillance (38) ;
un bus série (36) auquel l'unité de surveillance (38) et la pluralité d'appareils de champ (26) sont connectés ;
le système de communication (34) étant conçu pour mettre en œuvre le procédé selon l'une des revendications précédentes.

15. Système de communication (34) selon la revendication 14,
dans lequel chacun des appareils de champ (26) comprend un module de synchronisation (40), lequel présente :
un module d'envoi/de réception (42) permettant d'envoyer et de recevoir des chaînes de bits par l'intermédiaire du bus (36), le module d'envoi/de réception (42) étant conçu pour reconnaître des blocs d'instructions (56) d'un télégramme d'état (54) et pour envoyer des valeurs d'état à l'intérieur d'un télégramme d'état (54) ;
un module de détermination de position d'envoi (44) qui est conçu pour déterminer la position d'envoi d'état à partir d'un bloc d'instructions (56) d'un télégramme d'état (54) reçu par le module d'envoi/de réception (42), et déclencher ainsi le module d'envoi/de réception (42) pour l'envoi de la valeur d'état.
